# NOUVEAU FASCICULE DE BREVET EUROPEEN

(11) **EP 2 205 124 B2**
(45) Date de publication et mention de la décision concernant l'opposition: **09.12.2015**
(45) Mention de la délivrance du brevet: 04.04.2012
(21) Numéro de dépôt: 08841228.3
(22) Date de dépôt: 17.10.2008
(51) Int. Cl.: A47B 77/02

(54) **MEUBLE DE CUISINE**
KÜCHENEINHEIT
KITCHEN UNIT

(30) Priorité: 17.10.2007 FR 0758373
(43) Date de publication de la demande: 14.07.2010
(73) Titulaire: Brevac (Société à Responsabilité Limitée), 67000 Strasbourg (FR)
(72) Inventeur: LAUNAY, Patrick, F-67118 Geispolsheim (FR); EBERHARDT, Christian, F-67000 Strasbourg (FR)
(74) Mandataire: Nuss, Laurent
(86) Numéro de dépôt international: PCT/FR2008/051873
(87) Numéro de publication internationale: WO 2009/053653

(56) Documents cités:
- DE-B4- 10 115 841
- DE-C2- 10 116 098
- FR-A- 2 537 020
- HTTP://WEB.ARCHIVE.ORG/WEB/20070205183037/ WWW.RIEBER.DE/FILEADMIN/BRO SCHUEREN_KATALOGE_FLYER/DEUTSCH/RIEBER_VAR ITHEK_DEUTSCH.PDF,, 5 février 2007 (2007-02-05), XP002479852

## Description

La présente invention se rapporte au domaine de la cuisine mobile et événementielle et concerne plus particulièrement un meuble de cuisine mobile permettant de réaliser la cuisson et/ou la préparation de mets culinaires.

Il existe actuellement une tendance consistant à montrer au public la façon dont les mets qu'ils vont déguster sont préparés et cuisinés. Cela peut avoir lieu aussi bien dans les restaurants qu'au cours d'événements tels que les salons, par exemple dans des locaux non prévus à cet effet.

Le cuisinier doit donc pouvoir disposer d'un meuble de cuisson et de préparation qui soit, d'une part, facilement déplaçable pour pouvoir le déplacer d'un endroit à l'autre dans une pièce, mais également facilement transportable, par exemple par camion ou camionnette, lorsque la démonstration ou la cuisson a lieu dans un endroit spécifique dans lequel aucune installation adaptée n'est prévue.

En outre, ce meuble doit pouvoir être facilement modulable en ce qui concerne les différents types de cuisson disponibles afin de permettre au cuisinier de proposer un vaste choix de mets, ou encore pour lui permettre d'adapter son meuble en fonction des besoins, par exemple en fonction du thème de l'événement. Il doit également disposer de moyens de rangement et de conservation des aliments.

Enfin, un tel meuble doit également pouvoir être facilement et rapidement nettoyé et respecter les normes d'hygiène à cet effet.

La présente invention a pour but de répondre à au moins certaines des attentes exprimées ci-dessus.

Le document XP002479852 Rieber AG : « Kochen vor dem Gast-Die Varithek » a pour objet un appareil ajustable utilisé en station de cuisine mobile, comprenant un plan de travail en contrebas délimité par trois parois verticales, deux parois latérales et une paroi arrière, formant un espace de réception ou niche recevant deux modules porteurs amovibles en forme de caisson globalement en U supportant chacun un outil fonctionnel de cuisson ou une planche à découper, et trois volets rabattables, à savoir deux volets latéraux et un volet arrière, montés chacun sur la face externe de l'un desdits bords respectifs latéraux et arrière délimitant le plan de travail en contrebas. Chaque module comporte une paroi arrière et deux parois latérales fermées et une paroi inférieure reliant les trois parois en formant le fond du module. Les parois latérales comportent chacune sur leur face interne à différentes hauteurs des saillies permettant d'insérer dans chaque module un outil comme un tiroir. Chaque volet rabattable permet à une personne de prendre son repas autour dudit plan de travail en position déployée. En outre, une paroi de séparation de faible hauteur entoure le bord supérieur de la niche de réception, entre celle-ci et les volets rabattables.

Toutefois, cette station de cuisine mobile ne permet pas une activité permanente proprement dite de préparation des aliments en vue de leur cuisson sur lesdits outils. En outre, les modules porteurs amovibles confèrent un encombrement important qui ne permet pas leur arrangement dans un espace réduit, par exemple dans ladite station sous le plan de travail..

La présente invention a pour but de répondre à au moins certaines des attentes exprimées ci-dessus.

A cet effet, elle a pour objet un meuble de cuisine mobile pourvu d'un premier plan de travail et d'un second plan de travail transformable par adjonction d'au moins un poste amovible et interchangeable de préparation culinaire et/ou de cuisson, le premier et le second plans de travail étant montés sur un châssis muni de moyens de roulement, lequel second plan de travail est pourvu d'au moins un support amovible pour le ou les postes amovible(s) et interchangeables de préparation culinaire et/ou de cuisson et de moyens de raccordement desdits postes amovibles et interchangeables à une source d'énergie électrique, le second plan de travail est décalé verticalement, vers le bas, par rapport au premier plan de travail et est fermé à l'arrière par une paroi frontale de hauteur égale à celle du premier plan de travail, se caractérisant en ce que chaque support amovible se présente sous la forme d'une entretoise et le second plan de travail est délimité par deux bords verticaux du premier plan de travail, en ce que chaque poste amovible et interchangeable est pourvu, au niveau de deux parois latérales opposées, d'un bord en saillie coopérant, en position de travail, avec le bord de deux entretoises adjacentes ou avec une entretoise et un bord adjacent du premier plan de travail et en ce que chaque support amovible est de forme générale en L, l'extrémité libre de la grande branche du L étant disposée, en position montée dudit support amovible, sur un plot fixé à la paroi frontale.

L'invention sera mieux comprise, grâce à la description ci-après, qui se rapporte à deux modes de réalisation préférés, donnés à titre d'exemples non limitatifs, et expliqués avec référence aux dessins schématiques annexés, dans lesquels :
la figure 1 est une vue en perspective d'un meuble selon un premier mode de réalisation de l'invention, comportant deux postes amovibles et interchangeables,
la figure 2 est une vue en coupe transversale du meuble de la figure 1, au niveau du moyen d'aspiration de l'air,
les figures 3A et 3B sont des vues en perspective d'un meuble selon le second mode de réalisation de l'invention, comportant un couvercle de protection représenté respectivement en position rabattue et en position déployée,
la figure 4 est une vue similaire à celle de la figure 1 représentant un meuble comportant trois postes amovibles et interchangeables, et
la figure 5 est une vue en perspective du meuble représenté à la figure 1, dans lequel les postes amovibles ont été retirés.

Comme le montrent les dessins annexés, le meuble 1 de cuisine selon l'invention est pourvu d'un premier plan de travail 2. Ce meuble 1 est mobile et comprend un second plan de travail 3 transformable par adjonction d'au moins un poste amovible et interchangeable 4 de préparation culinaire et/ou de cuisson. Bien que les dessins annexés représentent le meuble 1 avec deux ou trois postes amovibles et interchangeables 4, ce dernier peut, bien entendu, comporter un seul poste amovible et interchangeable 4, ou encore quatre postes amovibles et interchangeables 4, ou plus.

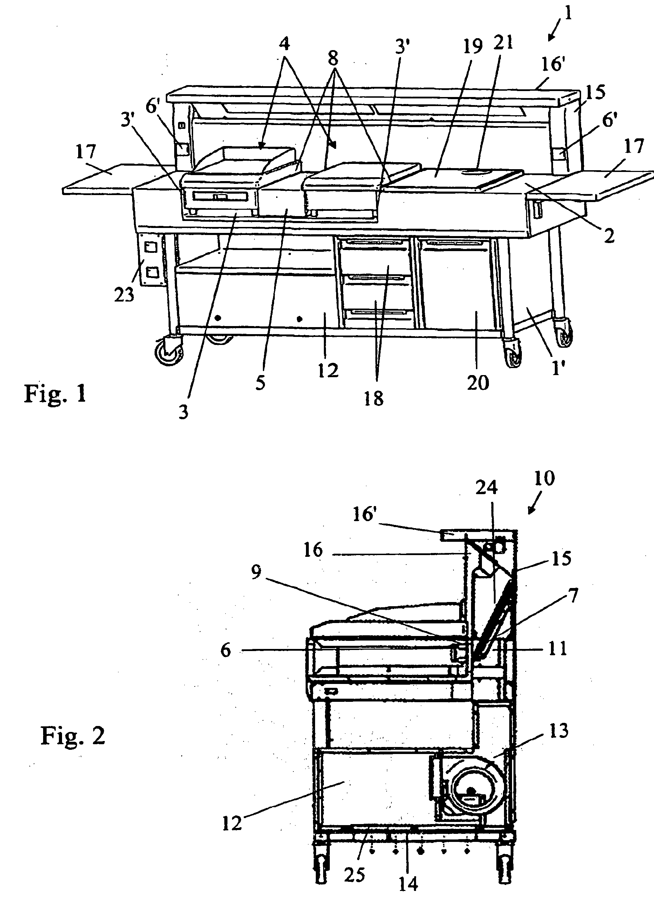

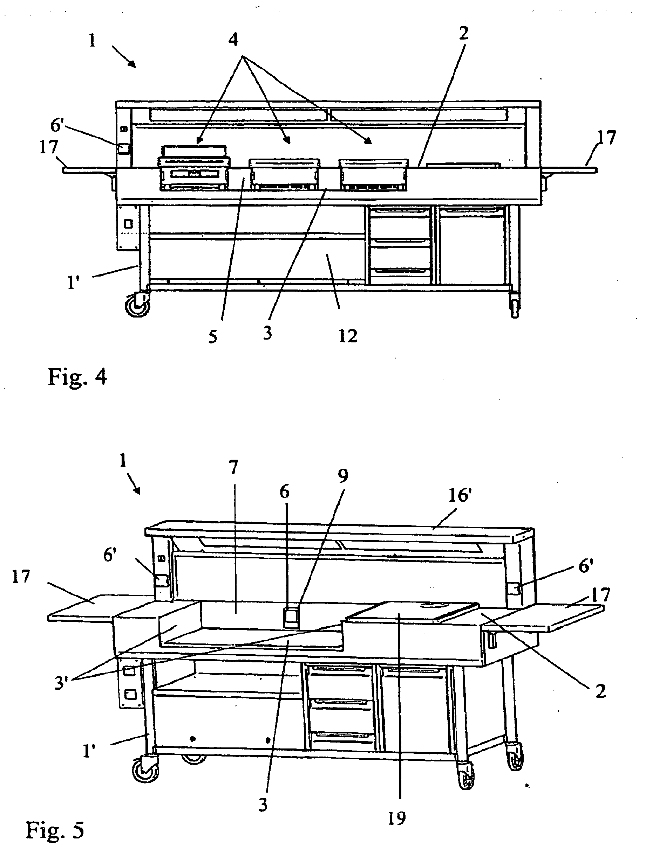

Ces postes amovibles et interchangeables 4 lorsqu'ils sont dédiés à la cuisson, utilisent de préférence un chauffage du type par induction. Ils peuvent à cet effet être réalisés sous la forme d'une plaque chauffante à induction, d'un plateau de cuisson du type à la plancha, d'une table de cuisson du type wok, ou analogue. Les figures 1, 2, 3A, 3B et 5 représentent une utilisation de postes amovibles et interchangeables 4 comportant une plaque chauffante à induction et un plateau de cuisson du type à la plancha. La figure 4 représente un meuble 1 avec un poste amovible et interchangeable 4 supplémentaire.

Ces postes amovibles et interchangeables 4 peuvent également servir à la préparation des aliments et se présenter sous la forme d'un robot multifonctions, d'un hachoir ou analogues.

Ces postes amovibles et interchangeables 4 sont autonomes, c'est-à-dire qu'ils peuvent également fonctionner sans être disposés sur le meuble 1 selon l'invention. En outre, ils sont interchangeables, de sorte qu'il est possible de les intervertir, sans difficulté particulière, le meuble 1 selon l'invention peut ainsi recevoir, sans modification de sa structure, un ou plusieurs postes amovibles et interchangeables 4 différents ou identiques.

Le fait de rendre ces derniers amovibles permet notamment de les retirer, comme cela est décrit plus loin, en vue du nettoyage du second plan de travail 3. Cela facilite également le transport du meuble 1 selon l'invention. En effet, le fait de retirer les postes amovibles et interchangeables 4 permet, d'une part, d'alléger le meuble 1, ce qui facilite son transport et, d'autre part, de limiter les risques d'endommagement liés au transport, et donc de réduire le niveau de protection nécessaire. Des caissons spécifiques peuvent, par exemple, être prévus pour le transport des postes amovibles et interchangeables 4.

En outre, le cuisinier peut avantageusement n'emporter que les postes amovibles et interchangeables 4 dont il a besoin, ce qui permet également de réduire, dans ce cas, la charge et le volume à transporter.

Comme représenté sur les figures annexées, le premier 2 et le second 3 plans de travail peuvent être montés sur un châssis 1' muni de moyens de roulement. Dans un souci de limitation du poids, ce châssis 1' peut être réalisé à partir de profilés, de préférence en acier inoxydable. Les moyens de roulement peuvent être des roulettes munies de freins, comme cela est représenté sur les dessins des figures annexées.

Selon l'invention, le second plan de travail 3 peut être pourvu d'au moins un support amovible 5 pour le ou les postes amovibles et interchangeables 4 de préparation culinaire et/ou de cuisson et de moyens de raccordement 6 desdits postes amovibles et interchangeables 4 à une source d'énergie électrique.

Un boîtier électrique général 23 pouvant être raccordé au courant secteur peut être prévu à cet effet sur le châssis 1' du meuble 1, boîtier auquel sont reliés les moyens de raccordement 6. Ces derniers peuvent être sous forme de prises électriques étanches. Le meuble 1 selon l'invention peut, en outre, comprendre des moyens de raccordement 6' supplémentaires qui ne sont pas destinés aux postes amovibles et interchangeables 4, mais qui sont prévus pour d'autres dispositifs susceptibles d'être utilisés pour la préparation de la nourriture, tel qu'un hachoir électrique, par exemple. Le boîtier électrique général 23 peut également comprendre un disjoncteur de protection contre les surtensions.

Comme cela ressort des dessins annexés, chaque support amovible 5 se présente sous la forme d'une entretoise et le second plan de travail 3 est décalé verticalement, vers le bas, par rapport au premier plan de travail 2 et est délimité par deux bords verticaux 3' du premier plan de travail 2 et fermé à l'arrière par une paroi frontale 7 de hauteur égale à celle du premier plan de travail 2. De cette manière, le second plan de travail 3 se présente sous la forme d'une surface plane lorsque les entretoises formant les supports amovibles 5 et les postes amovibles et interchangeables 4 sont retirés, ce qui facilite son nettoyage et permet de remplir les conditions relatives aux normes en matière d'hygiène.

Pour faciliter le montage des postes amovibles et interchangeables 4 sur le meuble 1 selon l'invention, chaque poste amovible et interchangeable 4 est pourvu, au niveau de deux parois latérales opposées, d'un bord en saillie 8 destiné à coopérer, en position de travail ou position montée, avec le bord de deux entretoises 5 adjacentes ou avec une entretoise 5 et un bord adjacent du premier plan de travail 2. Il suffit donc de poser les postes amovibles et interchangeables 4 sur les bords adjacents concernés de deux entretoises 5 ou d'une entretoise 5 et du premier plan de travail 2 puis de connecter lesdits postes à un moyen de raccordement 6 pour pouvoir réaliser la cuisson ou la préparation envisagée. La mise en place et en service du meuble 1 est donc très simple et très rapide et ne nécessite aucun outil, ni aucune pièce complémentaire de fixation.

En outre, et selon l'invention, chaque support amovible 5 est de forme générale en L dont l'extrémité libre de la grande branche du L est disposée, en position montée dudit support amovible 5, sur un plot 9 fixé à la paroi frontale 7, de telle sorte que le retrait ou la mise en place d'une entretoise formant support amovible 5 est très simple et ne nécessite aucun outil.

De manière caractéristique, et selon un premier mode de réalisation de l'invention, le meuble 1 peut comprendre une façade arrière 15 de hauteur supérieure à celle du premier plan de travail 2 et peut intégrer un moyen 10 de captage, de filtration des vapeurs de cuisson et de réintroduction de l'air traité. La réintroduction de l'air traité peut consister à évacuer l'air traité dans la pièce dans laquelle est disposé le meuble 1.

Cela est particulièrement avantageux lorsque le meuble est utilisé dans des lieux faiblement ventilés. Cette façade arrière 15 peut présenter des moyens d'éclairage du premier 2 et du second 3 plans de travail tels que des néons basse tension.

A cet effet, comme cela ressort de la figure le moyen 10 de captage, de filtration des vapeurs de cuisson et de réintroduction de l'air traité peut être constitué par un conduit d'aspiration 11 intégré dans la façade arrière 15 du meuble 1, comprenant un premier filtre de traitement 24 et relié à un caisson de dépression 12 comprenant un moyen 13 d'aspiration de l'air venant du conduit d'aspiration 11 et de soufflage de ce dernier à travers un second filtre de traitement 25 en direction d'une sortie d'air traité 14 réalisée dans une paroi du caisson de dépression 12. Le premier filtre de traitement 24 peut être un filtre à graisses.

Le conduit d'aspiration 11 peut déboucher sur une ouverture d'arrivée d'air 16 située sur la paroi de la façade arrière 15 située du côté du ou des postes amovibles et interchangeables 4, à un niveau supérieur à celui du premier plan de travail 2 et donc au-dessus du ou des postes amovibles et interchangeables 4 et le caisson de dépression 12 peut être disposé sur le châssis 1' du meuble 1 de telle sorte que la sortie d'air traité 14 est dirigée vers le bas. Cette sortie d'air traité 14 peut être sous la forme d'une ouverture réalisée dans la paroi inférieure du caisson de dépression 12 et dans laquelle est intégrée une grille. En outre, le second filtre de traitement 25 peut être monté dans le caisson de dépression 12, contre la grille et être un filtre anti-odeurs et anti-condensation. Un tel filtre peut être réalisé à partir de zéolite et être ainsi nettoyé par un passage à haute température (250°C) dans un four.

Le moyen 13 d'aspiration de l'air peut être intégré dans le caisson et consister en deux moteurs d'aspiration permettant de réaliser une aspiration de 1 500 m³/h.

L'invention prévoit également qu'un échangeur de chaleur peut être intégré dans le caisson de dépression 12 afin de réaliser une régulation de la température au moins dans une zone proche du meuble 1. Cet échangeur peut ainsi permettre de pallier l'augmentation de température due à la cuisson de l'air dans la zone du meuble 1. L'air neuf et frais est ainsi soufflé à travers l'ouverture de la paroi inférieure du caisson de dépression 12.

Comme représenté sur les figures, le premier plan de travail 2 peut, en outre, être muni, sur au moins un de ses bords d'extrémité latéraux, d'une table de rallonge 17 susceptible d'être rabattue depuis une position de travail dans laquelle elle est située dans le plan du premier plan de travail 2 vers une position escamotée, le long du bord concerné. Ainsi, en position de travail, ces tables de rallonge 17 permettent d'augmenter la surface de travail du meuble 1 ou encore servir de table de desserte, par exemple.

Le meuble 1 selon l'invention peut également comprendre une fonction de chauffe-plats grâce à la façade arrière 15 du meuble 1 qui peut être surmontée d'une tablette 16' dans laquelle sont intégrées des résistances chauffantes, de telle sorte que les plats dressés peuvent être disposés sur cette tablette et rester chauds pendant une certaine durée.

Pour que le cuisinier puisse avoir les accessoires et ustensiles nécessaires à portée de main, le meuble 1 peut comporter au moins un module 18 de rangement. Ce ou ces modules 18 sont de préférence montés sur le châssis 1' et peuvent être des tiroirs, des dispositifs range-bouteilles, des étagères ou analogues. Il peut, bien entendu, être également envisagé d'intégrer un module 18 de rangement réfrigéré, par exemple un réfrigérateur, pour la conservation des denrées périssables.

Pour faciliter le travail de préparation des aliments, le premier plan de travail 2 peut comporter une planche à découper 19 et un conduit vertical traversant ledit premier plan de travail 2 et reliant un module formant bac de déchets 20 monté sur le châssis 1' du meuble 1 à une découpe 21 de la planche à découper 19. Le cuisinier dispose ainsi d'un bac de déchets 20 intégré dans le meuble 1 qui lui permet notamment de jeter par un simple geste du bras, sans nécessiter l'ouverture d'un couvercle ou d'une porte, des déchets présents sur la planche à découper.

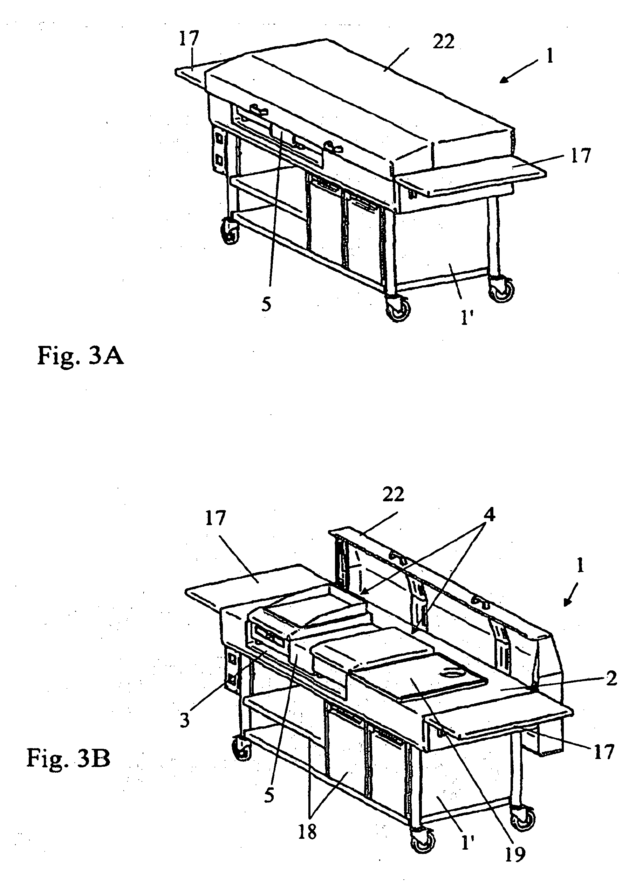

Selon un second mode de réalisation de l'invention, le meuble 1 peut comprendre un couvercle de protection 22 monté à pivotement sur ledit meuble 1 et susceptible d'être rabattu pour recouvrir le premier 1 et le second 2 plans de travail. Dans ce mode, représenté aux figures 3A et 3B, le meuble 1 n'intègre pas de moyen 10 de captage, de filtration des vapeurs de cuisson et de réintroduction de l'air traité. Un tel meuble 1 est particulièrement adapté pour une utilisation en terrasse.

La largeur du meuble 1, qu'il soit réalisé selon le premier ou le second mode de réalisation, sera préférentiellement sélectionnée de sorte qu'elle permette le passage du meuble 1 à travers une porte présentant une largeur standard, et donc inférieure à 90 centimètres. Dans le second mode de réalisation, le meuble devrait présenter une telle largeur, même en position non rabattue du couvercle de protection 22.

Le meuble 1 selon la présente invention est donc facilement modulable, démontable, transportable et lavable suivant les normes d'hygiène. Les postes amovibles et interchangeables 4 de préparation culinaire et/ou de cuisson peuvent être transportés séparément du meuble 1, par exemple dans des containers séparés, ce qui allège le poids du meuble 1, par exemple de 150 kg dans le cas de trois postes amovibles et interchangeables 4 et de 100 kg dans le cas de deux postes amovibles et interchangeables.

Un tel meuble 1 est donc particulièrement adapté à la restauration en terrasse, dans le cadre d'un club de vacances, en utilisation sous la forme de cuisines satellites autour d'une piscine, dans le cadre d'une démonstration culinaire ou encore dans des centres commerciaux ou lors de salons.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention définie par les revendications annexées.

## Revendications

1. Meuble (1) de cuisine mobile pourvu d'un premier plan de travail (2) et d'un second plan de travail (3) transformable par adjonction d'au moins un poste amovible et interchangeable (4) de préparation culinaire et/ou de cuisson, le premier (2) et le second (3) plans de travail étant montés sur un châssis (1') muni de moyens de roulement, lequel second plan de travail (3) est pourvu d'au moins un support amovible (5) pour le ou les postes amovible(s) et interchangeables (4) de préparation culinaire et/ou de cuisson et de moyens de raccordement (6) desdits postes amovibles et interchangeables (4) à une source d'énergie électrique, le second plan de travail (3) est décalé verticalement, vers le bas, par rapport au premier plan de travail (2) et est fermé à l'arrière par une paroi frontale (7) de hauteur égale à celle du premier plan de travail (2) **caractérisé en ce que** chaque support amovible (5) se présente sous la forme d'une entretoise et le second plan de travail (3) est délimité par deux bords verticaux (3') du premier plan de travail (2), **en ce que** chaque poste amovible et interchangeable (4) est pourvu, au niveau de deux parois latérales opposées, d'un bord en saillie (8) coopérant, en position de travail, avec le bord de deux entretoises (5) adjacentes ou avec une entretoise (5) et un bord adjacent du premier plan de travail (2) et **en ce que** chaque support amovible (5) est de forme générale en L, l'extrémité libre de la grande branche du L étant disposée, en position montée dudit support amovible (5), sur un plot (9) fixé à la paroi frontale (7).

2. Meuble, selon la revendication 1, **caractérisé en ce qu'**il comprend une façade arrière (15) de hauteur supérieure à celle du premier plan de travail (2) et intègre un moyen (10) de captage, de filtration des vapeurs de cuisson et de réintroduction de l'air traité.

3. Meuble, selon la revendication 2, **caractérisé en ce que** le moyen (10) de captage, de filtration des vapeurs de cuisson et de réintroduction de l'air traité est constitué par un conduit d'aspiration (11) intégré dans la façade arrière (15) du meuble (1), comprenant un premier filtre de traitement (24) et relié à un caisson de dépression (12) comprenant un moyen (13) d'aspiration de l'air venant du conduit d'aspiration (11) et de soufflage de ce dernier à travers un second filtre de traitement (25) en direction d'une sortie d'air traité (14) réalisée dans une paroi du caisson de dépression (12).

4. Meuble, selon les revendications 1 et 3, **caractérisé en ce que** le conduit d'aspiration (11) débouche sur une ouverture d'arrivée d'air (16) située sur la paroi de la façade arrière (15) située du côté du ou des postes amovibles et interchangeables 4, à un niveau supérieur à celui du premier plan de travail (2) et **en ce que** le caisson de dépression (12) est disposé sur le châssis (1') du meuble (I) de telle sorte que la sortie d'air traité (14) est dirigée vers le bas.

5. Meuble, selon l'une quelconque des revendications 3 et 4, **caractérisé en ce qu'**un échangeur de chaleur est intégré dans le caisson de dépression (12).

6. Meuble, selon l'une quelconque des revendications 1 à 5, **caractérisé en ce que** le premier plan de travail (2) est muni, sur au moins un de ses bords d'extrémité latéraux, d'une table de rallonge (17) susceptible d'être rabattue depuis une position de travail dans laquelle elle est située dans le plan du premier plan de travail (2) vers une position escamotée, le long du bord concerné.

7. Meuble, selon l'une quelconque des revendications 2 à 5 ou selon les revendications 2 et 5, **caractérisé en ce que** la façade arrière (15) du meuble (1) est surmontée d'une tablette (16') dans laquelle sont intégrées des résistances chauffantes.

8. Meuble, selon l'une quelconque des revendications 1 à 7, **caractérisé en ce qu'**il comporte au moins un module (18) de rangement.

9. Meuble selon l'une quelconque des revendications 1 à 8, **caractérisé en ce que** le premier plan de travail (2) comporte une planche à découper (19) et un conduit vertical traversant ledit premier plan de travail (2) et reliant un module formant bac de déchets (20) monté sur le châssis (1') du meuble (1) à une découpe (21) de la planche à découper (19).

10. Meuble, selon la revendication 1, **caractérisé en ce qu'**il comprend un couvercle de protection (22) monté à pivotement sur ledit meuble (1) et susceptible d'être rabattu pour recouvrir le premier (1) et le second (2) plans de travail.

## Patentansprüche

1. Mobiles Küchenmöbel (1), das mit einer ersten Arbeitsfläche (2) und mit einer zweiten Arbeitsfläche (3) versehen ist, die durch das Anbringen mindestens einer abnehmbaren und austauschbaren Essenszubereitungs- und/oder Kochstation (4) wandelbar ist, wobei die erste Arbeitsfläche (2) und die zweite Arbeitsfläche (3) auf einem mit Laufmitteln ausgestatteten Gestell (1') montiert sind, die zweite Arbeitsfläche (3) mit mindestens einem abnehmbaren Träger (5) für die abnehmbaren und austauschbaren Essenszubereitungs- und/oder Kochstationen (4) und mit Anschlussmitteln (6) für die abnehmbaren und austauschbaren Stationen (4) an eine elektrische Energiequelle versehen ist und die zweite Arbeitsfläche (3) bezüglich der ersten Arbeitsfläche (2) vertikal nach unten versetzt und nach hinten durch eine Stirnwand (7) abgeschlossen ist, deren Höhe gleich der der ersten Arbeitsfläche (2) ist,
**dadurch gekennzeichnet, dass**
jeder abnehmbare Träger (5) ein Distanzstück darstellt und die zweite Arbeitsfläche (3) durch zwei vertikale Ränder (3') der ersten Arbeitsfläche (2) begrenzt ist, dass jede abnehmbare und austauschbare Station (4) auf Höhe der beiden lateralen gegenüberliegenden Wände mit einem Aufbaurand (8) versehen ist, der in Arbeitsposition mit dem Rand der beiden benachbarten Distanzstücke (5) oder mit einem Distanzstück (5) und einem benachbarten Rand der ersten Arbeitsfläche (2) zusammenarbeitet und dass jeder abnehmbare Träger (5) insgesamt eine L-Form hat und das freie Ende des großen L-Schenkels in montierter Position des abnehmbaren Trägers (5) an einem Kontakt (9) angeordnet ist, der an der Stirnwand (7) befestigt ist.

2. Möbel nach Anspruch 1, **dadurch gekennzeichnet, dass** es eine Rückfassade (15) aufweist, die eine größere Höhe als die der ersten Arbeitsfläche (2) hat, und es ein Mittel (10) zum Auffangen und Filtern von Küchendämpfen und zum Rückführen von behandelter Luft umfasst.

3. Möbel nach Anspruch 2, **dadurch gekennzeichnet, dass** das Mittel (10) zum Auffangen und Filtern der Küchendämpfe und zum Rückführen von behandelter Luft sich aus einem Ansaugkanal (11) zusammensetzt, der in die Rückfassade (15) des Möbels (1) integriert ist, der einen ersten Behandlungsfilter (24) aufweist und der an einen Unterdruckkasten (15) angeschlossen ist, welcher ein Mittel (13) zum Ansaugen der von dem Ansaugkanal (11) kommenden Luft und dem Ausblasen der letztern über einen zweiten Behandlungsfilter (25) in Richtung eines Auslasses (14) für behandelte Luft aufweist, wobei der Auslass (14) in einer Wand des Unterdruckkastens ausgestaltet ist.

4. Möbel nach einem der Ansprüche 1 bis 3, **dadurch gekennzeichnet, dass** der Ansaugkanal (11) an einer Lufteinlassöffnung (16) mündet, die an der Wand der Rückfassade (15) angeordnet ist, welche seitens der abnehmbaren und austauschbaren Stationen (4) in einer Höhe oberhalb der der ersten Arbeitsfläche (2) angeordnet ist, und dass der Unterdruckkasten (12) auf dem Gestell (1') des Möbels (1) derart angeordnet ist, dass der Auslass (14) für behandelte Luft nach unten gerichtet ist.

5. Möbel nach einem der Ansprüche 3 oder 4, **dadurch gekennzeichnet, dass** ein Wärmetauscher in den Unterdruckkasten (12) integriert ist.

6. Möbel nach einem der Ansprüche 1 bis 5, **dadurch gekennzeichnet, dass** die erste Arbeitsfläche (2) an mindestens einem ihrer seitlichen Endränder mit einem Verlängerungstisch (17) versehen ist, der von einer Arbeitsposition, in welcher er in der Ebene der ersten Arbeitsfläche (2) angeordnet ist, in eine eingezogene Position entlang des entsprechenden Randes herunterklappbar ist.

7. Möbel nach einem der Ansprüche 2 bis 5 oder nach den Ansprüchen 2 und 5, **dadurch gekennzeichnet, dass** die Rückfassade (15) des Möbels (1) mit einer Platte (16') überbaut ist, in die Heizwiderstände integriert sind.

8. Möbel nach einem der Ansprüche 1 bis 7, **dadurch gekennzeichnet, dass** es mindestens ein Verstauungsmodul (18) aufweist.

9. Möbel nach einem der Ansprüche 1 bis 8, **dadurch gekennzeichnet, dass** die erste Arbeitsfläche (2) ein Schneidebrett (19) und einen vertikalen Kanal aufweist, welcher durch die erste Arbeitsfläche (2) hindurchtritt und ein Modul, das einen an dem Gestell (1') des Möbels (1) montierten Abfallbehälter (20) bildet, mit einer Ausnehmung (21) des Schneidebretts (19) verbindet.

10. Möbel nach Anspruch 1, **dadurch gekennzeichnet, dass** es eine schwenkbar an dem Möbel (1) montierte Schutzhaube (22) aufweist, die herunterklappbar ist, um die erste Arbeitsfläche (1) und die zweite Arbeitsfläche (2) abzudecken.

## Claims

1. Mobile kitchen unit (1) provided with a first work top (2) and a second work top (3) which can be transformed by adding at least one interchangeable movable cooking and/or culinary preparation station (4), the first (2) and second (3) work tops being mounted on a support frame (1') provided with rolling means, the said second work top (3) is provided with at least one movable support (5) for the or each movable interchangeable cooking and/or culinary preparation stations (4) and with means (4) for connecting the said movable interchangeable stations (4) to an electrical energy source, the second work top (3) is vertically off-set, towards the bottom, in relation to the first work top (2) and is closed at the back by a front wall (7) of equal height to that of the first work top (2) **characterised in that** each movable support (5) is present in the form of a spacer, and the second work top (3) is defined by two vertical edges (3') of the first work top (2), **in that** each movable interchangeable station (4) is provided at the level of the two opposite lateral walls, with a protruding edge (8) interacting in the work position with the edge of the two adjacent spacers (5) or with a one spacer (5) and an adjacent edge of the first work top (2) and **in that** each movable support (5) is of a general L-shape, the free end of the longer arm of the L being located in the assembled position of the said movable support (5) on a contact (9) fixed to the front wall (7).

2. Kitchen unit according to claim 1 **characterised in that** it comprises a rear façade (15) which is higher than that of the first work top (2) and integrates means (10) for collecting up and filtering the cooking fumes and recirculating the treated air.

3. Kitchen unit according to claim 2 **characterised in that** the means (10) for collecting up and filtering the cooking fumes and recirculating the treated air comprises a suction pipe (11) integrated in the rear façade (15) of the furniture unit (1), comprising a first processing filter (24) and connected to a vacuum box (12) comprising means (13) for drawing in the air coming from the suction pipe (11) and blowing the latter through a second processing filter (25) in the direction of a processed air outlet (14) formed in a wall of the vacuum box (12).

4. Kitchen unit according to claims 1 and 3 **characterised in that** the suction pipe (11) opens onto an air inlet opening (16) located on the wall of the rear façade (15) located alongside the or each movable interchangeable station (4), at a level higher than that of the first work top (2) and **in that** the vacuum box (12) is located on the frame (1') of the furniture unit (1) in such a way that the processed air exit (14) is directed towards the bottom.

5. Kitchen unit according to any of claims 3 and 4 **characterised in that** a heat exchanger is integrated in the vacuum box (12).

6. Kitchen unit according to any of claims 1 to 5 **characterised in that** the first work top (2) is provided, on at least one of its lateral end edges, with an extension table (17) capable of being lowered from a work position in which it is located in the plane of the first work top (2) towards a retracted position, along the relative edge.

7. Kitchen unit according to any of claims 2 to 5 or according to claims 2 and 5 **characterised in that** the rear façade (15) of the furniture unit (1) is surmounted by a shelf (16') in which heating resistances are integrated.

8. Kitchen unit according to any of claims 1 to 7 **characterised in that** it comprises at least one storage module (18).

9. Kitchen unit according to any of claims 1 to 8 **characterised in that** the first work top (2) comprises a cutting board (19) and a vertical pipe which passes through the said first work top (2) and connects a waste bin module (20) mounted on the frame (1') of the furniture unit (1) to a cut-out (21) in the cutting board (19).

10. Kitchen unit according to claim 1 **characterised in that** it comprises a protective cover (22) which is mounted for pivotal movement on the said furniture unit (1) and is capable of being moved down in order to cover up the first (1) and second (2) work tops.
